# FASCICULE DE BREVET EUROPEEN

(11) **EP 2 558 925 B1**
(45) Date de publication et mention de la délivrance du brevet: **25.05.2016**
(21) Numéro de dépôt: 11709951.5
(22) Date de dépôt: 24.03.2011
(51) Int. Cl.: G06F 3/033, G01D 5/26, G01D 5/347, F16H 59/02, B60K 37/06, B60K 35/00, G01D 11/28, G06F 19/00

(54) **SYSTEME D'INDEXAGE ET D'AFFICHAGE HOLOGRAPHIQUE POUR INTERFACE DE COMMANDE MANUELLE**
HOLOGRAFISCHES INDEXIERUNGS- UND ANZEIGESYSTEM FÜR EINE MANUELLE STEUEROBERFLÄCHE
HOLOGRAPHIC INDEXING AND DISPLAY SYSTEM FOR MANUAL CONTROL INTERFACE

(30) Priorité: 12.04.2010 FR 1052758
(43) Date de publication de la demande: 20.02.2013
(73) Titulaire: Delphi Technologies, Inc., Troy, MI 48007 (US)
(72) Inventeur: GEYL, Laurent, F-67000 Strasbourg (FR)
(74) Mandataire: Delphi France SAS
(86) Numéro de dépôt international: PCT/EP2011/054524
(87) Numéro de publication internationale: WO 2011/128196

(56) Documents cités:
- EP-A1- 1 862 773
- WO-A1-2005/093131
- US-A- 5 278 532
- US-A- 6 067 492
- US-A1- 2007 057 781
- US-B1- 6 300 940

## Description

### DOMAINE TECHNIQUE

La présente invention concerne une interface de commande manuelle notamment pour un tableau de bord de véhicule automobile.

### ARRIERE-PLAN TECHNOLOGIQUE DE L'INVENTION

La présente invention concerne plus particulièrement une interface de commande manuelle

Un tel type d'interface est particulièrement adapté pour une utilisation dans l'habitacle d'un véhicule automobile où une pluralité d'appareils ayant différentes fonctions doit pouvoir être commandée de manière simple et ergonomique par le conducteur du véhicule. Des interfaces ont donc déjà été proposées sous la forme de molettes tournantes ou sous la forme de joysticks pour commander par exemple à la fois le dispositif d'air conditionné, l'autoradio, la désactivation du système anti-patinage etc.

On connait de US6300940B1 un encodeur de basculement d'un hologramme et de US5278532A, US2007/057781A1, US6067492A et WO2005/093131 A1 des affichages tête haute avec des motifs holographiques.

Le document EP1862773 décrit un exemple de commutateur apte à être utilisé dans un véhicule et utilisant un photo-détecteur couplé à un organe holographique mobile muni de cellules de codage prévues pour détecter les différentes positions de l'organe mobile du commutateur. Un tel type de commutateur peut être utilisé dans une interface de commande.

Ce type de commutateur comporte de nombreux avantages. Toutefois, ce document ne prévoit pas de moyen d'affichage des fonctions sélectionnées.

### RESUME DE L'INVENTION

La présente invention vise à proposer notamment une interface de commande intégrant de manière optimisée la détection de la fonction sélectionnée et l'affichage de la fonction sélectionnée.

Dans ce but, l'invention propose une interface de commande manuelle pour un appareil, notamment un véhicule automobile, comportant :
- un organe mobile qui est commandé manuellement dans plusieurs positions indexées de sélection par rapport à un support, suivant une direction de sélection, chaque position de sélection correspondant à la sélection d'au moins une fonction déterminée de l'appareil,
- un photo-détecteur capable de générer des signaux de position de l'organe mobile,
- un élément holographique mobile dont les déplacements sont liés aux déplacements de l'organe mobile suivant la direction de sélection, comportant une première série d'hologrammes formant des motifs de codage de la position de sélection de l'organe mobile par rapport au support aptes à être projetés vers le photo-détecteur lorsqu'ils sont illuminés par un faisceau lumineux adapté,
caractérisée en ce que l'élément holographique mobile comporte une seconde série d'hologrammes formant des motifs figuratifs représentant les fonctions de l'appareil, la position de l'élément holographique mobile par rapport au support déterminant le motif figuratif qui est illuminé par un faisceau lumineux adapté, de manière à projeter le motif figuratif correspondant à la fonction sélectionnée vers une zone d'affichage visible par l'utilisateur.

L'invention permet avec très peu de composants à la fois la détection et l'affichage d'une fonction particulière.

Si l'on souhaite privilégier la fiabilité de l'interface, on peut utiliser une source lumineuse dédiée à la détection de la position de l'organe mobile et une source lumineuse dédiée à l'affichage de la fonction sélectionnée.

De préférence, chaque hologramme est constitué par une matrice de structures diffractives élémentaires en relief à au moins deux niveaux, avantageusement au moins quatre niveaux ce qui permet d'obtenir une seule image diffractée en évitant des images d'ordres secondaires.

Avantageusement, les hologrammes sont agencés suivant une série de cellules prévues pour être illuminées sélectivement par le faisceau lumineux en fonction de la position de sélection de l'organe mobile, chaque cellule formant simultanément le motif de codage et le motif figuratif associé à partir d'une illumination par le même faisceau lumineux, ce qui permet d'obtenir une interface de commande très compacte utilisant très peu de composants.

Selon une autre caractéristique avantageuse de l'invention, chaque cellule comporte plusieurs hologrammes identiques formant le motif sélectionné de manière à optimiser la répartition de la puissance lumineuse entre le motif figuratif et le motif de codage dans des proportions qui tiennent compte de la sensibilité de l'observateur, de la sensibilité du photo-détecteur, et de la puissance de la source lumineuse.

Selon d'autres caractéristiques avantageuses de l'invention :
- l'organe mobile se déplace par rapport au support suivant une direction d'activation distincte de la direction de sélection entre une position neutre et une position d'activation, l'élément holographique mobile est lié aux déplacements de l'organe mobile suivant la direction d'activation, et les motifs de codage sont agencés sur l'élément holographique de sorte que, dans la position d'activation, les motifs de codage sont projetés au moins partiellement hors du photo-détecteur, l'absence de détection des motifs de codage par le photo-détecteur déclenchant un signal d'activation de la fonction sélectionnée ;
- l'organe mobile se déplace par rapport au support suivant une direction d'activation distincte de la direction de sélection entre une position neutre et une position d'activation, et le déplacement de l'organe mobile suivant la direction d'activation est indépendant du déplacement de l'élément holographique mobile ;
- l'organe mobile est monté à rotation autour d'un axe, la direction de sélection correspondant au mouvement de rotation de l'organe mobile, et l'élément holographique mobile est porté par l'organe mobile ;
- l'élément holographique mobile comporte un secteur de disque annulaire en matériau optique transparent et les hologrammes sont réalisés dans l'épaisseur du disque ;
- l'élément holographique mobile comporte au moins un motif figuratif additionnel qui représente un état de la fonction sélectionnée et qui est agencé en dehors de la cellule correspondant à la fonction sélectionnée, ledit motif figuratif additionnel étant illuminé par une source lumineuse additionnelle et projeté vers une zone d'affichage additionnelle ;
- le photo-détecteur et la source lumineuse produisant le faisceau lumineux illuminant l'élément holographique mobile sont agencés sur une plaque à circuits imprimés portée par le support ;
- le motif de codage correspondant à la fonction sélectionnée est projeté sur le photo-détecteur après réflexion sur au moins un élément réflectif, et au moins la portion illuminée de l'élément holographique mobile est agencée entre l'élément réflectif et la source lumineuse ;
- la zone d'affichage comporte un élément optique de diffusion.

La présente invention propose aussi une méthode d'affichage d'une fonction sélectionnée par une interface de commande manuelle selon l'une des caractéristiques précédentes, caractérisée en ce qu'elle comporte les étapes suivantes :
- détection d'une position indexée de sélection après déplacement de l'organe mobile suivant la direction de sélection,
- affichage de la fonction sélectionnée sous la forme d'un motif figuratif holographique correspondant à la position de sélection à partir de la source lumineuse utilisée par le photo-détecteur.

De préférence, la méthode comporte une étape de détection de l'état d'activation de la fonction sélectionnée au moyen du photo-détecteur.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue en coupe axiale longitudinale qui représente schématiquement un premier mode de réalisation de l'interface de commande selon l'invention comportant une seule source lumineuse ;
- la figure 2 est une vue en coupe transversale qui illustre schématiquement l'agencement des hologrammes sur l'élément holographique mobile équipant l'interface de commande de la figure 1 ;
- la figure 3 est une vue en coupe axiale qui illustre schématiquement la structure d'une matrice diffractive à deux niveaux agencée dans l'élément holographique mobile de la figure 2 ;
- la figure 4 est une vue similaire à celle de la figure 2 qui illustre une variante du premier mode de réalisation dans laquelle chaque hologramme comporte un motif de codage et un motif figuratif ;
- la figure 5 est une vue similaire à celle de la figure 3 qui illustre schématiquement la structure d'une matrice diffractive à quatre niveaux au lieu de deux ;
- la figure 6 est une vue similaire à celle de la figure 1 qui représente un deuxième mode de réalisation de l'interface de commande selon l'invention comportant deux sources lumineuses ;
- la figure 7 est une vue similaire à celle de la figure 1 qui représente un troisième mode de réalisation de l'interface de commande selon l'invention dans lequel le photo-détecteur équipant l'interface détecte à la fois la position de l'organe mobile et l'activation de la fonction sélectionnée ;
- la figure 8 est une vue similaire à celle de la figure 1 qui représente un quatrième mode de réalisation de l'interface de commande selon l'invention comportant des photo-détecteurs à fourche pour détecter l'activation de la fonction sélectionnée et d'autres paramètres de fonctionnement
- la figure 9 est une vue en perspective qui représente schématiquement un cinquième mode de réalisation de l'interface de commande selon l'invention comportant trois sources lumineuses prévues pour permettre à la fois l'affichage de la fonction sélectionnée et l'affichage de l'état de la fonction sélectionnée ;
- la figure 10 est une vue de dessus de l'interface de la figure 9 qui représente l'affichage de la fonction sélectionnée et l'affichage de son état.

### DESCRIPTION DES MODES DE REALISATION PREFERES

Dans la suite de la description, des éléments identiques ou similaires seront désignés par les mêmes signes de référence. De plus, on utilisera à titre non limitatif des orientations verticale V, longitudinale L, et transversale T selon le repère V,L,T qui est représenté sur les figures.

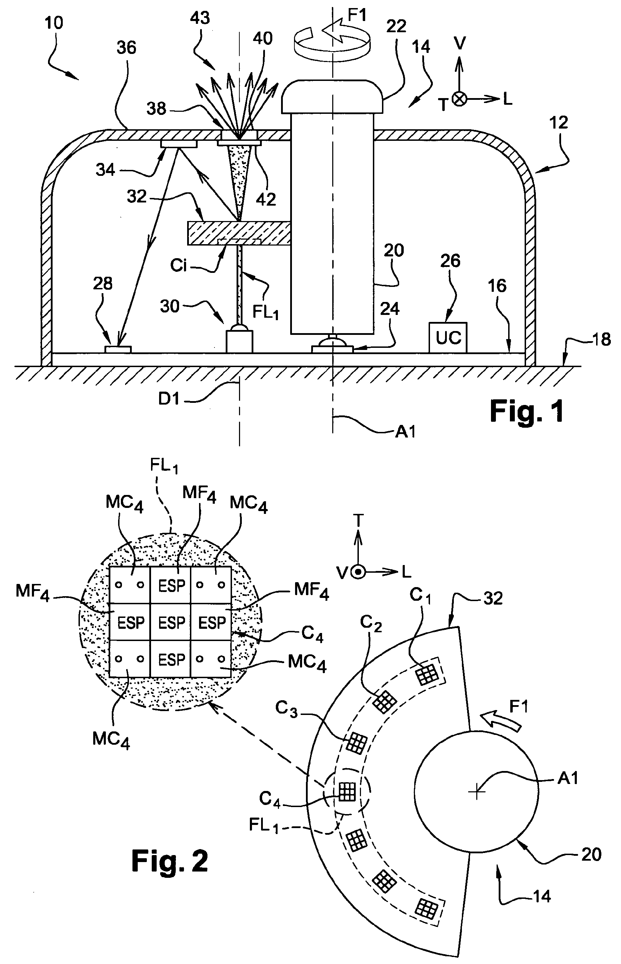

Sur la figure 1, on a représenté un premier mode de réalisation d'une interface de commande manuelle 10 réalisée conformément aux enseignements de l'invention. Cette interface 10 est prévue pour être agencée dans l'habitacle d'un véhicule, par exemple au tableau de bord, et elle vise à commander différentes fonctions du véhicule comme le dispositif de conditionnement d'air, l'autoradio, et la désactivation du système anti-patinage.

L'interface de commande manuelle 10 comporte ici un boîtier 12 dans lequel sont logés les principaux composants de l'interface 10, en particulier un organe mobile de commande manuelle 14 et une plaque à circuits imprimés 16 qui est fixée sur un support 18. La plaque à circuits imprimés 16 s'étend globalement dans un plan horizontal.

L'organe mobile 14 a ici la forme d'un commutateur rotatif autour d'un axe principal de rotation A1 vertical. Il est commandé manuellement dans plusieurs positions angulaires indexées de sélection par rapport au support 18, suivant une direction de sélection symbolisée par la flèche F1. Chaque position de sélection correspond à la sélection d'au moins une fonction FTᵢ déterminée du véhicule. La lettre « i » peut ici prendre les valeurs 1 à n en fonction du nombre n de fonctions disponibles.

Selon le mode de réalisation représenté, l'organe mobile 14 est aussi commandé manuellement en coulissement suivant l'axe de rotation A1 entre une position haute neutre PN (représentée sur la figure 1) et une position basse d'activation PA de manière à permettre l'activation et la désactivation de la fonction sélectionnée FTᵢ. Sur la figure 1, la position d'activation PA est représentée en traits discontinus.

L'organe mobile 14 comporte ici, suivant l'axe de rotation A1, un arbre 20 muni à son extrémité axiale supérieure d'une molette 22 prévue pour être manipulée par un utilisateur tel que le conducteur du véhicule, la molette 22 s'étendant à l'extérieur du boîtier 12. L'arbre 20 est lié en rotation à la molette 22. Il est guidé en rotation et en coulissement par rapport au support 18 grâce à des moyens appropriés (non représentés).

L'activation/désactivation de la fonction sélectionnée FTᵢ est obtenue par une pression axiale exercée sur la molette 22 et symbolisée par la flèche F2. Un commutateur à pression 24, par exemple du type à dôme déformable, est agencé sur la plaque à circuits imprimés 16, sous l'arbre 20, de manière à commuter lorsqu'une pression axiale est exercée sur la molette 22 et de manière à générer un signal d'activation vers une unité centrale 26.

L'interface 10 comporte un photo-détecteur 28 qui est agencé sur la plaque à circuits imprimés 16 et qui est prévu pour générer des signaux de position de l'organe mobile 14 et les transmettre vers l'unité centrale 26.

L'unité centrale 26 est prévue pour traiter les signaux provenant du commutateur à pression 24 et du photo-détecteur 28 en vue d'émettre des signaux de commande correspondant à la fonction sélectionnée FTᵢ.

Une source lumineuse 30, telle qu'une diode laser, émettant un faisceau lumineux FL₁ de lumière globalement cohérente et monochromatique, est agencée sur la plaque à circuits imprimés 16 et commandée par l'unité centrale 26.

Le faisceau lumineux FL₁ est dirigé ici suivant une direction D1 parallèle à l'axe de rotation A1 vers un élément holographique mobile 32 dont les déplacements sont liés aux déplacements angulaires de l'organe mobile 14 autour de son axe A1. L'élément holographique mobile 32 comporte une première série S1 d'hologrammes formant des motifs de codage MCᵢ de la position de sélection de l'organe mobile 14 par rapport au support 18 aptes à être projetés vers le photo-détecteur 28 lorsqu'ils sont illuminés par le faisceau lumineux FL₁.

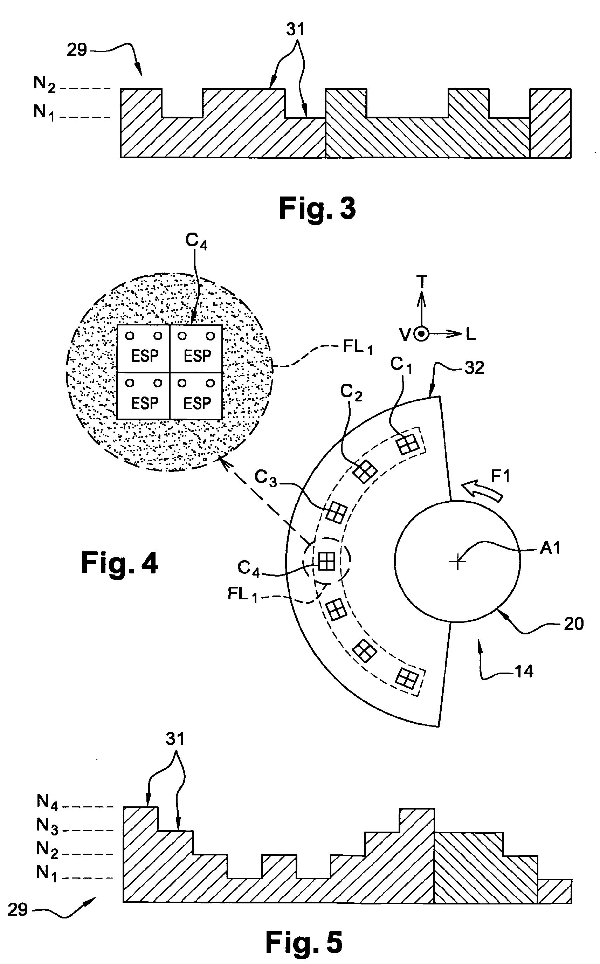

Selon le premier mode de réalisation, comme représenté schématiquement sur les figures 3 et 5, chaque hologramme est constitué par une matrice 29 de structures diffractives élémentaires 31 en relief à au moins deux niveaux Nx, x étant une puissance de 2. Selon l'exemple de la figure 3, la matrice 29 comporte deux niveaux N1, N2, alors que selon l'exemple de la figure 5, la matrice 29 comporte quatre niveaux N1, N2, N3, N4.

Des structures à quatre niveaux ou plus seront préférentiellement implémentées du fait de leur haute efficacité énergétique.

L'encodage des hologrammes sur quatre niveaux permet une digitalisation plus fine de l'information. Lors de l'éclairage de la matrice 29, on obtient un meilleur rendement énergétique du fait qu'il y a moins d'énergie lumineuse non diffractée. L'éclairage d'une matrice à quatre niveaux donne une seule image diffractée tandis qu'une matrice à deux niveaux induit une image et son symétrique (ordres secondaires). Ces ordres secondaires produisent une redondance du motif projeté à des endroits non souhaités. Les structures à quatre niveaux ou plus permettent donc d'éviter l'apparition de ces ordres secondaires dans les motifs holographiques projetés.

La structure de la matrice est calculée par ordinateur pour former l'hologramme choisi. Le faisceau lumineux FL₁ qui traverse la matrice est diffracté par les structures diffractives et projette sur le photo-détecteur 28 le motif de codage MCᵢ qui constitue un code optique binaire lisible par le photo-détecteur 28 et directement et instantanément transformé en un code électronique binaire.

Des détails complémentaires sur la structure et les avantages de l'utilisation de motifs de codage MCᵢ holographiques sont décrits notamment dans le document EP1862773A1, en particulier dans les paragraphes [0004] à [0009].

Avantageusement, l'élément holographique mobile 32 est constitué par un secteur de disque annulaire qui est réalisé en matériau optique. On entend ici par matériau optique un matériau sensiblement transparent et susceptible d'être pourvu de réseaux diffractifs constituant des hologrammes. En particulier, ce matériau optique permet avantageusement de réaliser les hologrammes sous la forme de structures diffractives en relief dans l'épaisseur du secteur de disque annulaire. Des plastiques optiques tel que le polymétacrylate de méthyle (PMMA) ou encore le polycarbonate peuvent être employés à cet effet. Les structures diffractives peuvent être réalisées à faible coût dans ce type de matériau, notamment par injection ou embossage.

Selon le mode de réalisation représenté, une partie du faisceau lumineux FL₁ qui traverse l'élément holographique mobile 32 est réfléchie sur un élément réflectif 34 porté par la partie supérieure 36 du boîtier 12 avant d'atteindre le photo-détecteur 28 où elle projette le motif de codage MCᵢ associé à la fonction sélectionnée Frᵢ.

Conformément aux enseignements de l'invention, l'élément holographique mobile 32 comporte une seconde série S2 d'hologrammes formant des motifs figuratifs MFᵢ représentant les fonctions FTᵢ du véhicule. La position de l'élément holographique mobile 32 par rapport au support 18 détermine le motif figuratif MFᵢ qui est illuminé par le faisceau lumineux FL₁, de manière à projeter le motif figuratif MFᵢ correspondant à la fonction sélectionnée FTᵢ vers une zone d'affichage 38 visible par l'utilisateur. Les motifs figuratifs MFᵢ peuvent être constitués de lettres du type « ESP », « A/C » et de pictogrammes.

Les hologrammes formant les motifs figuratifs MFᵢ sont obtenus d'une manière similaire aux hologrammes formant les motifs de codage MCᵢ.

Avantageusement, selon le premier mode de réalisation, comme illustré par la figure 2, les hologrammes sont agencés suivant une série de cellules Ci prévues pour être illuminées sélectivement par le faisceau lumineux FL₁ en fonction de la position de sélection de l'organe mobile 32. Chaque cellule Ci correspond à une fonction sélectionnée FTᵢ et comporte au moins deux hologrammes, l'un formant le motif de codage MCᵢ et l'autre le motif figuratif MFᵢ. Ainsi, lorsque la cellule Ci est illuminée par le faisceau lumineux FL₁, le motif de codage MCᵢ et le motif figuratif MFᵢ sont projetés simultanément respectivement vers le photo-détecteur 28 et vers la zone d'affichage 38. Une seule source lumineuse 30 suffit donc à la détection de la fonction sélectionnée FTᵢ et à l'affichage de la fonction sélectionnée FTᵢ.

Dans l'exemple représenté sur la figure 2, le spot produit par le faisceau lumineux FL₁ illumine la cellule C₄ qui correspond à la fonction FT₄ de désactivation du système anti-patinage symbolisé par les lettres « ESP ». Le motif de codage MC₄ est ici formé de deux points lumineux séparés par un espace de longueur déterminée et le motif figuratif MF₄ est formé par les lettres « ESP ».

De manière avantageuse, comme illustré par la figure 2, chaque cellule Cᵢ comporte plusieurs hologrammes identiques formant le motif de codage MCᵢ sélectionné et plusieurs hologrammes identiques formant le motif figuratif MFᵢ sélectionné. Ainsi, chaque motif est projeté sous la forme de plusieurs images superposées ce qui permet d'amplifier l'intensité lumineuse du motif projeté. Ici, le motif figuratif MF₄ de la fonction sélectionnée FT₄ se répète plus souvent que le motif de codage MC₄ car l'intensité lumineuse dans la zone d'affichage 38 est primordiale pour assurer une bonne visibilité de la fonction sélectionnée FT₄.

Plus précisément, chaque motif projeté MCᵢ, MFᵢ dispose d'une intensité proportionnelle à la surface éclairée dans le plan de l'hologramme. Ainsi en prenant l'exemple de la figure 2, où le motif figuratif MF₄ se répète cinq fois alors que le motif de codage MC₄ ne se répète que quatre fois, un ratio de 5/4 existe entre l'énergie lumineuse dédiée au motif figuratif MF₄ et l'énergie lumineuse dédiée au motif de codage MC₄. Bien entendu, le ratio entre la surface occupée par le motif figuratif MF₄ et la surface occupée par le motif de codage MC₄ permet également d'optimiser l'allocation de puissance lumineuse pour une utilisation optimale de la puissance de la source lumineuse 30. Un ratio optimal est à calculer en fonction de la sensibilité du photo-détecteur 28, de la sensibilité de l'observateur, et de la puissance de la source lumineuse 30.

La zone d'affichage 38 comporte ici une fenêtre 40 aménagée dans la partie supérieure 36 du boîtier 12, en vis-à-vis de l'élément holographique mobile 32. La fenêtre 40 est réalisée par exemple en thermoplastique transparent du type polymétacrylate de méthyle (PMMA). De préférence, le thermoplastique est fumé pour améliorer le contraste lors de l'affichage de la fonction sélectionnée ainsi que pour des raisons d'aspect. Un diffuseur 42 est agencé sur la face inférieure de la fenêtre 40 de manière à matérialiser le plan dans lequel le motif figuratif MFᵢ est perçu par l'observateur. Le diffuseur 42 a également pour fonction d'élargir le cône d'émission angulaire 43 et donc la visibilité du motif figuratif MFᵢ ainsi que de minimiser l'effet de granularité (speckle).

Selon le premier mode de réalisation, le coulissement de l'organe mobile 14 est indépendant du déplacement de l'élément holographique mobile 32. L'élément holographique mobile 32 est par exemple monté sur l'arbre 20 au moyen d'une articulation (non représentée) permettant le déplacement de l'organe mobile 14 vers la position d'activation sans provoquer de déplacement de l'élément holographique mobile 32 vers le bas, celui-ci restant dans sa position axiale.

Selon une variante du premier mode de réalisation, illustrée par la figure 4, chaque cellule Cᵢ comporte plusieurs hologrammes identiques, chacun de ces hologrammes formant à la fois le motif de codage MCᵢ et le motif figuratif MFᵢ associé. L'information d'affichage et l'information de codage sont intégrés dans le même hologramme répété périodiquement dans la cellule Cᵢ. Le ratio entre l'énergie lumineuse projetée sous forme de motif figuratif et l'énergie lumineuse projetée sous forme de motif de codage correspond dans ce cas au ratio des surfaces occupées par les deux motifs dans l'hologramme considéré.

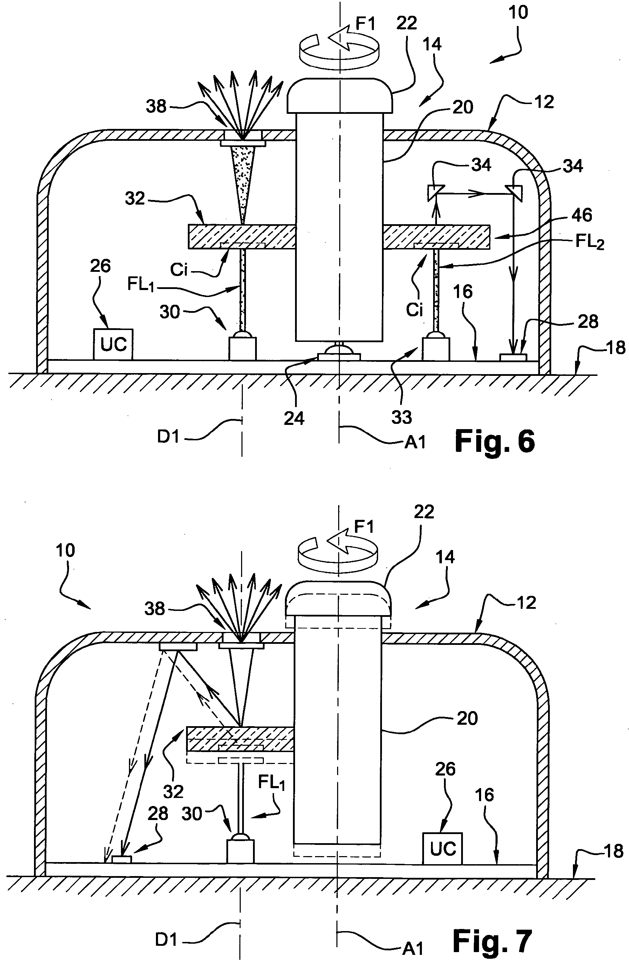

On décrit maintenant un deuxième mode de réalisation de l'invention en référence à la figure 6. Ce deuxième mode se distingue du premier en ce qu'il comporte deux sources lumineuses 30, 33 formant respectivement un premier faisceau lumineux FL₁ qui produit le motif figuratif MFᵢ et un second faisceau lumineux FL₂ qui produit le motif de codage MCᵢ correspondant à la fonction sélectionnée FTᵢ. Les deux sources lumineuses 30, 33 sont ici agencées de part et d'autre de l'organe mobile 14.

L'élément holographique mobile 32 est ici constituée par un disque annulaire montée sur l'arbre 20 de sorte qu'un premier secteur angulaire 44 est positionné en vis-à-vis de la première source lumineuse 30 alors qu'un second secteur angulaire 46 est positionné en vis-à-vis de la seconde source lumineuse 33. Deux éléments réflectifs 34 sont ici agencés de manière adéquate pour diriger le second faisceau lumineux FL₂ vers le photo-détecteur 28.

Dans ce deuxième mode de réalisation, la cellule Cᵢ illuminée par la premier faisceau lumineux FL₁ contient uniquement le motif figuratif MFᵢ et la cellule Cᵢ illuminée par le second faisceau lumineux FL₂ contient uniquement le motif de codage MCᵢ.

Un troisième mode de réalisation de l'invention est représenté sur la figure 7. Ce troisième mode se distingue du premier en ce que l'élément holographique mobile 32 est fixé sur l'arbre 20 de l'organe mobile 14 de manière à être lié à son coulissement axial lors de l'activation/désactivation de la fonction sélectionnée FTᵢ.

Dans ce troisième mode de réalisation, les motifs de codage MCᵢ sont agencés sur l'élément holographique mobile 32 de sorte que le déplacement de l'organe mobile 14 jusqu'à sa position d'activation PA provoque un déplacement du motif de codage projeté MCᵢ par rapport au photo-détecteur 28, ledit motif de codage projeté MCᵢ se retrouvant alors partiellement hors de la zone sensible du photo-détecteur 28. Ainsi, l'absence de détection du motif de codage MCᵢ en entier par le photo-détecteur 28 déclenche un signal d'activation de la fonction sélectionnée Frᵢ. Le commutateur à pression 24 n'est alors plus nécessaire, le photo-détecteur 28 servant à la fois à la détection de la position angulaire et de la position axiale PN, PA de l'organe mobile 14. Ce mode de réalisation permet l'implémentation d'une fonction d'affichage, d'une fonction de codage et d'une fonction de commutation sans recourir à des contacts entre pièces et donc en évitant toutes défaillances d'usure.

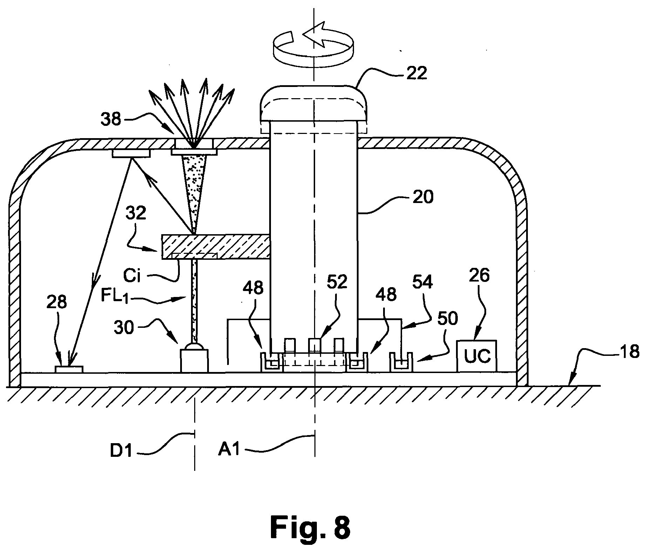

Selon un quatrième mode de réalisation de l'invention, qui est représenté sur la figure 8, le commutateur à pression 24 du premier mode de réalisation est remplacé par des fourches optiques 48, 50 qui sont agencées sur la plaque à circuits imprimés 16. Chaque fourche optique 48, 50 produit un faisceau lumineux dans un plan transversal, entre les deux branches de la fourche, qui, lorsqu'il est interrompu, provoque une commutation. L'arbre 20 de l'organe mobile 14 comporte à son extrémité axiale inférieure des languettes 52, 54 prévues pour coopérer avec les fourches optiques 48, 50 en venant se positionner entre les branches d'une fourche de manière à permettre la détection du coulissement axial de l'arbre 20.

Selon ce quatrième mode de réalisation, l'organe mobile 14 est prévu pour pouvoir tourner autour de son axe A1 lorsqu'il occupe sa position d'activation PA. Ceci vise à permettre de commander à l'aide de l'organe mobile 14 plusieurs états de la fonction sélectionnée FTᵢ. Par exemple, si la fonction sélectionnée FTᵢ est le volume de l'autoradio, la rotation de l'organe mobile 14 en position d'activation PA permet d'en commander l'intensité.

Les languettes 52, 54 et les photo-détecteurs associés 48, 50 peuvent être agencés de manière à permettre la détection du sens de rotation et/ou du nombre d'incréments en rotation de l'organe mobile 20 et/ou de la vitesse de rotation de l'organe mobile 20.

Avantageusement, le montage de l'élément holographique mobile 32 sur l'arbre 20 permet, en position d'activation PA, une rotation de l'arbre 20 sans rotation de l'élément holographique mobile 32. Un dispositif de verrouillage à l'aide de cannelure sur l'arbre 20 et d'encoches associées sur l'élément holographique mobile 32 peut par exemple être prévu à cet effet.

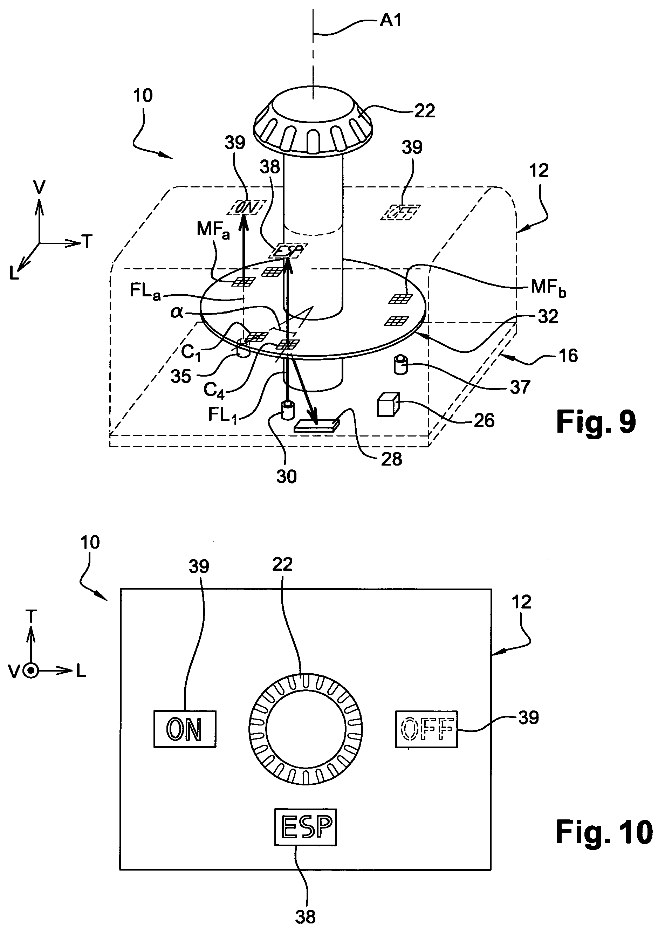

Un cinquième mode de réalisation de l'invention est représenté sur les figures 9 et 10, dans lequel au moins une fonction sélectionnée FTᵢ possède au moins deux états activée/désactivée qui sont affichés par l'interface de commande 10 selon l'invention. Selon ce mode de réalisation, qui est ici dérivé du premier mode de réalisation (figure 1), l'interface 10 comporte deux sources lumineuses additionnelles 35, 37, en plus de la source lumineuse principale 30, qui sont prévues pour afficher les états de la fonction FTᵢ, ici l'état activé ON et l'état désactivé OFF de la fonction anti-patinage FT₄. L'allumage des sources lumineuses additionnelles 35, 37 est commandé par l'unité centrale 26.

L'interface 10 fonctionne ici de manière similaire au premier mode de réalisation pour l'affichage et la détection de la fonction sélectionnée FTᵢ au moyen de la source lumineuse principale 30 et du photo-détecteur 28. Ce fonctionnement ne sera donc pas décrit en détail.

Selon le cinquième mode de réalisation, lorsque la fonction anti-patinage FT₄ est sélectionnée au moyen de la molette 22, l'une des sources lumineuses additionnelles 35, 37 est allumée et produit un faisceau lumineux additionnel FLₐ qui illumine un motif figuratif additionnel MFₐ agencé sur l'élément holographique mobile 32 en vue d'afficher l'état de la fonction sélectionnée FT₄, ici l'état activé ON en considérant les figures 9 et 10. Grâce au faisceau lumineux additionnel FLₐ, le motif figuratif additionnel MFₐ est projeté vers une zone d'affichage additionnelle 39 agencée sur le boîtier 12 et visible par l'utilisateur.

Selon le mode de réalisation représenté ici, le motif figuratif additionnel MFₐ est décalé angulairement de 90 degrés, dans le sens horaire en considérant la figure 10, par rapport à la cellule C₄ contenant le motif figuratif MF₄ affichant la fonction sélectionnée FT₄. Un motif figuratif additionnel MF_{b}, qui est prévu pour représenter l'état désactivé OFF de la fonction sélectionnée FT₄, est décalé angulairement de 90 degrés, dans le sens antihoraire en considérant la figure 10, sur l'élément holographique mobile 32. La source lumineuse additionnelle 37 qui lui est associée est ici éteinte.

Avantageusement, l'utilisateur peut sélectionner une autre fonction FT₁, telle que la fonction de sélection du mode de température conducteur/passager, dont la cellule C₁ comportant le motif figuratif MF₁ et le motif de codage MC₁ associés est décalée d'un angle α déterminé par rapport à la cellule C₄ correspondant à la fonction anti-patinage FT₄. Les motifs figuratifs additionnels MFₐ, MF_{b} associés à cette autre fonction FT₁ sont décalés du même angle α par rapport aux motifs figuratifs additionnels MFₐ, MF_{b} associés à la fonction anti-patinage FT₄. Ainsi, lorsque l'utilisateur sélectionne l'autre fonction FT₁ en tournant la molette de l'angle α, l'interface 10 affiche l'autre fonction FT₁ et son état au moyens des motifs figuratifs additionnels MFₐ, MF_{b} et des sources lumineuses additionnelles 35, 37.

Selon un mode de réalisation avantageux, les sources lumineuses principale 30 et additionnelles 35, 37 produisent des faisceaux FL₁, FLₐ de couleurs distinctes ce qui permet d'afficher la fonction sélectionnée FTᵢ et son état avec des couleurs différentes.

Le cinquième mode de réalisation présente l'avantage de permettre à la fois la détection et l'affichage de la fonction sélectionnée FTᵢ et l'affichage de l'état de cette fonction FTᵢ au moyen du même élément holographique mobile 32 qui comporte plusieurs zones ou cellules Cᵢ dédiées aux différentes fonctions d'affichage.

Bien entendu, certaines caractéristiques des différents modes de réalisation peuvent être combinées. En particulier, dans le premier mode de réalisation, le commutateur à pression 24 pourrait être remplacé par un autre type de commutateur comme un commutateur utilisant des fourches optiques comme sur la figure 8.

On décrit maintenant une méthode d'affichage d'une fonction sélectionnée FTᵢ au moyen de l'interface de commande manuelle 10 selon le premier mode de réalisation de l'invention. Cette méthode comporte les étapes suivantes :
- détection d'une position indexée de sélection après pivotement de l'organe mobile 14 autour de son axe A1,
- affichage de la fonction sélectionnée FTᵢ sous la forme d'un motif figuratif holographique MFᵢ correspondant à la position de sélection à partir de la source lumineuse 30 utilisée par le photo-détecteur 28.

Dans le cas du deuxième mode de réalisation, cette méthode comporte en outre une étape de détection de l'état d'activation de la fonction sélectionnée FTᵢ au moyen du photo-détecteur 28.

## Revendications

1. Interface de commande manuelle (10) pour un appareil, notamment un véhicule automobile, comportant :
- un organe mobile (14) qui est commandé manuellement dans plusieurs positions indexées de sélection par rapport à un support (18), suivant une direction de sélection (F1), chaque position de sélection correspondant à la sélection d'au moins une fonction déterminée (FTᵢ) de l'appareil,
- un photo-détecteur (28) capable de générer des signaux de position de l'organe mobile (14),
- un élément holographique mobile (32) dont les déplacements sont liés aux déplacements de l'organe mobile (14) suivant la direction de sélection (F1), comportant une première série d'hologrammes formant des motifs de codage (MCi) de la position de sélection de l'organe mobile (14) par rapport au support (18) aptes à être projetés vers le photo-détecteur (28) lorsqu'ils sont illuminés par un faisceau lumineux (FL₁) adapté,
**caractérisée en ce que** l'élément holographique mobile (32) comporte une seconde série d'hologrammes formant des motifs figuratifs (MFᵢ) représentant les fonctions (FTᵢ) de l'appareil, la position de l'élément holographique mobile (32) par rapport au support (18) déterminant le motif figuratif (MFᵢ) qui est illuminé par un faisceau lumineux (FL₁) adapté, de manière à projeter le motif figuratif (MFᵢ) correspondant à la fonction sélectionnée (FTᵢ) vers une zone d'affichage (38) visible par l'utilisateur.

2. Interface (10) selon la revendication précédente, **caractérisée en ce que** chaque hologramme est constitué par une matrice (29) de structures diffractives élémentaires (31) en relief à au moins deux niveaux (N1, N2, N3, N4).

3. Interface (10) selon la revendication 1 ou 2, **caractérisée en ce que** les hologrammes sont agencés suivant une série de cellules (Cᵢ) prévues pour être illuminées sélectivement par le faisceau lumineux (FL₁) en fonction de la position de sélection de l'organe mobile (14), chaque cellule (Cᵢ) formant simultanément le motif de codage (MCᵢ) et le motif figuratif (MFᵢ) associé à partir d'une illumination par le même faisceau lumineux (FL₁).

4. Interface (10) selon la revendication précédente, **caractérisée en ce que** chaque cellule (Cᵢ) comporte plusieurs hologrammes identiques formant le motif sélectionné (MFᵢ, MCᵢ) de manière à optimiser la distribution de la puissance lumineuse dans le motif figuratif et dans le motif de codage.

5. Interface (10) selon l'une quelconque des revendications précédentes, **caractérisée en ce que** l'organe mobile (14) se déplace par rapport au support (18) suivant une direction d'activation (F1) distincte de la direction de sélection (F2) entre une position neutre (PN) et une position d'activation (PA), **en ce que** l'élément holographique mobile (32) est lié aux déplacements de l'organe mobile (14) suivant la direction d'activation (F2), et **en ce que** les motifs de codage (MCᵢ) sont agencés sur l'élément holographique (32) de sorte que, dans la position d'activation (PA), les motifs de codage (MCᵢ) sont projetés au moins partiellement hors du photo-détecteur (28), l'absence de détection des motifs de codage (MCᵢ) par le photo-détecteur (28) déclenchant un signal d'activation de la fonction sélectionnée (FTᵢ).

6. Interface (10) selon l'une quelconque des revendications 1 à 4, **caractérisée en ce que** l'organe mobile (14) se déplace par rapport au support (18) suivant une direction d'activation (F2) distincte de la direction de sélection (F1) entre une position neutre (PN) et une position d'activation (PA), et **en ce que** le déplacement de l'organe mobile (14) suivant la direction d'activation (F2) est indépendant du déplacement de l'élément holographique mobile (32).

7. Interface (10) selon l'une quelconque des revendications précédentes, **caractérisée en ce que** l'organe mobile (14) est monté à rotation autour d'un axe (A1), la direction de sélection (F1) correspondant au mouvement de rotation de l'organe mobile (14), et **en ce que** l'élément holographique mobile (32) est porté par l'organe mobile (14).

8. Interface (10) selon la revendication précédente prise en combinaison avec la revendication 2, **caractérisée en ce que** l'élément holographique mobile (32) comporte un secteur de disque annulaire en matériau optique transparent et **en ce que** les hologrammes sont réalisés dans l'épaisseur du disque.

9. Interface (10) selon la revendication 7 ou 8, **caractérisée en ce que** l'élément holographique mobile (32) comporte au moins un motif figuratif additionnel (MFₐ, MF_{b}) qui représente un état de la fonction sélectionnée (FTᵢ) et qui est agencé en dehors de la cellule (Ci) correspondant à la fonction sélectionnée (FTᵢ), ledit motif figuratif additionnel (MFₐ, MF_{b}) étant illuminé par une source lumineuse additionnelle (35, 37) et projeté vers une zone d'affichage additionnelle (39).

10. Interface (10) selon l'une quelconque des revendications précédentes, **caractérisée en ce que** le photo-détecteur (28) et la source lumineuse (30) produisant le faisceau lumineux (FL₁) illuminant l'élément holographique mobile (32) sont agencés sur une plaque à circuits imprimés (16) portée par le support (18).

11. Interface (10) selon la revendication précédente, **caractérisée en ce que** le motif de codage (MCᵢ) correspondant à la fonction sélectionnée (FTᵢ) est projeté sur le photo-détecteur (28) après réflexion sur au moins un élément réflectif (34), et **en ce qu'**au moins la portion illuminée de l'élément holographique mobile (32) est agencée entre l'élément réflectif (34) et la source lumineuse (30).

12. Interface (10) selon l'une quelconque des revendications précédentes, **caractérisée en ce que** la zone d'affichage (38) comporte un élément optique de diffusion (42).

13. Méthode d'affichage d'une fonction sélectionnée (FTᵢ) par une interface de commande manuelle (10) selon l'une quelconque des revendications précédentes prise en combinaison avec la revendication 3, **caractérisée en ce qu'**elle comporte les étapes suivantes :
- détection d'une position indexée de sélection après déplacement de l'organe mobile (14) suivant la direction de sélection (F1),
- affichage de la fonction sélectionnée (FTᵢ) sous la forme d'un motif figuratif holographique (MFᵢ) correspondant à la position de sélection à partir de la source lumineuse (30) utilisée par le photo-détecteur (28).

14. Méthode d'affichage selon la revendication précédente, **caractérisée en ce qu'**elle comporte une étape de détection de l'état d'activation de la fonction sélectionnée (FTᵢ) au moyen du photo-détecteur (28).

## Patentansprüche

1. Manuelle Steueroberfläche (10) für eine Einrichtung, insbesondere für ein Kraftfahrzeug, enthaltend:
- ein bewegliches Organ (14), das bezüglich eines Trägers (18) manuell in mehrere indexierte Auswahlpositionen in einer Auswahlrichtung (F1) gesteuert wird, wobei jede Auswahlposition der Auswahl zumindest einer bestimmten Funktion (FTᵢ) der Einrichtung entspricht,
- einen Fotodetektor (28), der in der Lage ist, Positionssignale des beweglichen Organs (14) zu erzeugen,
- ein bewegliches holographisches Element (32), dessen Verlagerungen mit den Verlagerungen des beweglichen Organs (14) in der Auswahlrichtung (F1) zusammenhängen, und das eine erste Reihe von Hologrammen aufweist, die Codierungsmuster (MCi) für die Auswahlposition des beweglichen Organs (14) bezüglich des Trägers (18) bilden, die dazu geeignet sind, zum Fotodetektor (28) projiziert zu werden, wenn sie durch ein geeignetes Lichtstrahlenbündel (FL1) beleuchtet werden,
**dadurch gekennzeichnet, dass** das bewegliche holographische Element (32) eine zweite Reihe von Hologrammen aufweist, die gegenständliche Muster (MFi) bilden, die Funktionen (FTi) der Einrichtung darstellen, wobei die Position des beweglichen holographischen Elements (32) bezüglich des Trägers (18) das gegenständliche Muster (MFi) bestimmt, das mit einem geeigneten Lichtstrahlenbündel (FLi) beleuchtet wird, so dass das der ausgewählten Funktion (FTi) entsprechende gegenständliche Muster (MFi) zu einem von dem Benutzer sichtbaren Anzeigebereich (38) projiziert wird.

2. Steueroberflache (10) nach dem vorangehenden Anspruch, **dadurch gekennzeichnet, dass** jedes Hologramm aus einer Matrix (29) von reliefartigen, diffraktiven Grundstrukturen (31) in zumindest zwei Niveauhöhen (N1, N2, N3, N4) besteht.

3. Steueroberfläche (10) nach Anspruch 1 oder 2, **dadurch gekennzeichnet, dass** die Hologramme entlang einer Reihe von Zellen (Cᵢ) angeordnet sind, die dazu vorgesehen sind, selektiv mit dem Lichtstrahlenbündel (FLᵢ) in Abhängigkeit von der Auswahlposition des beweglichen Organs (14) beleuchtet zu werden, wobei jede Zelle (Cᵢ) ausgehend von einer Beleuchtung mit dem gleichen Lichtstrahlenbündel (FLᵢ) gleichzeitig das Codierungsmuster (MCᵢ) und das zugeordnete gegenständliche Muster (MFᵢ) bildet.

4. Steueroberfläche (10) nach dem vorangehenden Anspruch, **dadurch gekennzeichnet, dass** jede Zelle (Ci) mehrere identische Hologramme aufweist, die das ausgewählte Muster (MFᵢ, MCᵢ) bilden, so dass die Verteilung der Lichtstärke in dem gegenständlichen Muster und in dem Codierungsmuster optimiert wird.

5. Steueroberfläche (10) nach einem der vorangehenden Ansprüche, **dadurch gekennzeichnet, dass** das bewegliche Organ (14) sich bezüglich des Trägers (18) in einer Aktivierungsrichtung (F1), die sich von der Auswahlrichtung (F2) unterscheidet, zwischen einer neutralen Position (PN) und einer Aktivierungsposition (PA) verlagert, dass das bewegliche holographische Element (32) mit den Verlagerungen des beweglichen Organs (14) in der Aktivierungsrichtung (F2) zusammenhängt, und dass die Codierungsmuster (MCᵢ) an dem holographischen Element (32) angeordnet sind, so dass in der Aktivierungsposition (PA) die Codierungsmuster (MCᵢ) zumindest teilweise außerhalb des Fotodetektors (28) projiziert werden, wobei eine ausbleibende Detektion der Codierungsmuster (MCᵢ) durch den Fotodetektor (28) ein Aktivierungssignal zum Aktivieren der ausgewählten Funktion (FTᵢ) auslöst.

6. Steueroberfläche (10) nach einem der Ansprüche 1 bis 4, **dadurch gekennzeichnet, dass** das bewegliche Organ (14) sich bezüglich des Trägers (18) in einer Aktivierungsrichtung (F2), die sich von der Auswahlrichtung (F1) unterscheidet, zwischen einer neutralen Position (PN) und einer Aktivierungsposition (PA) verlagert, und dass die Verlagerung des beweglichen Organs (14) in der Aktivierungsrichtung (F2) unabhängig von der Verlagerung des beweglichen holographischen Elements (32) erfolgt.

7. Steueroberfläche (10) nach einem der vorangehenden Ansprüche, **dadurch gekennzeichnet, dass** das bewegliche Organ (14) um eine Achse (A1) drehbar gelagert ist, wobei die Auswahlrichtung (F1) der Drehbewegung des beweglichen Organs (14) entspricht, und dass das bewegliche holographische Element (32) von dem beweglichen Organ (14) getragen wird.

8. Steueroberfläche (10) nach dem vorangehenden Anspruch in Kombination mit Anspruch 2, **dadurch gekennzeichnet, dass** das bewegliche holographische Element (32) einen Ringscheibensektor aus optisch transparentem Material aufweist und dass die Hologramme in der Dicke der Scheibe ausgebildet sind.

9. Steueroberfläche (10) nach Anspruch 7 oder 8, **dadurch gekennzeichnet, dass** das bewegliche holographische Element (32) zumindest ein zusätzliches gegenständliches Muster (MFₐ, MF_{b}) aufweist, das einen Zustand der ausgewählten Funktion (FTᵢ) darstellt und außerhalb der Zelle (Cᵢ) angeordnet ist, die der ausgewählten Funktion (FTᵢ) entspricht, wobei das zusätzliche gegenständliche Muster (MFₐ, MF_{b}) von einer zusätzlichen Lichtquelle (35, 37) beleuchtet und zu einem zusätzlichen Anzeigebereich (39) projiziert wird.

10. Steueroberfläche (10) nach einem der vorangehenden Ansprüche, **dadurch gekennzeichnet, dass** der Fotodetektor (28) und die Lichtquelle (30), die das das bewegliche holographische Element (32) beleuchtende Lichtstrahlenbündel (FL₁) erzeugen, auf einer gedruckten Leiterplatte (16) angeordnet sind, die von dem Träger (18) getragen wird.

11. Steueroberfläche (10) nach dem vorangehenden Anspruch, **dadurch gekennzeichnet, dass** das Codierungsmuster (MCᵢ), das der ausgewählten Funktion (FTᵢ) entspricht, nach Reflexion auf zumindest einem reflektierenden Element (34) auf den Fotodetektor (28) projiziert wird und dass zumindest der beleuchtete Abschnitt des beweglichen holographischen Elements (32) zwischen dem reflektierenden Element (34) und der Lichtquelle (30) angeordnet ist.

12. Steueroberfläche (10) nach einem der vorangehenden Ansprüche, **dadurch gekennzeichnet, dass** der Anzeigebereich (38) ein optisches Diffusionselement (42) aufweist.

13. Anzeigeverfahren zum Anzeigen einer ausgewählten Funktion (FTᵢ) über eine manuelle Steueroberfläche (10) nach einem der vorangehenden Ansprüche in Kombination mit Anspruch 3, **dadurch gekennzeichnet, dass** es die nachfolgenden Schritte umfasst:
- Detektieren einer indexierten Auswahlposition nach Verlagerung des beweglichen Organs (14) in der Auswahlrichtung (F1),
- Anzeigen der ausgewählten Funktion (FTi) in Form eines gegenständlichen holographischen Musters (MFi), das der Auswahlposition entspricht, ausgehend von der Lichtquelle (30), die von dem Fotodetektor (28) verwendet wird.

14. Anzeigeverfahren nach dem vorangehenden Anspruch, **dadurch gekennzeichnet, dass** es einen Schritt des Detektierens von dem Zustand der Aktivierung der ausgewählten Funktion (FTᵢ) mit Hilfe des Fotodetektors (28) umfasst.

## Claims

1. Manual control interface (10) for an apparatus, notably a motor vehicle, comprising:
- a mobile member (14) which is controlled manually in a number of indexed selection positions in relation to a support (18), according to a direction of selection (F1), each selection position corresponding to the selection of at least one determined function (FTᵢ) of the apparatus,
- a photo detector (28) capable of generating position signals for the mobile member (14),
- a mobile holographic element (32), the movements of which are linked to the movements of the mobile member (14) in the direction of selection (F1), comprising a first series of holograms forming coding patterns (MCi) of the selection position of the mobile member (14) in relation to the support (18) suitable for being projected towards the photo detector (28) when they are illuminated by a suitable light beam (FL1),
**characterized in that** the mobile holographic element (32) comprises a second series of holograms forming figurative patterns (MFi) representing the functions (FTi) of the apparatus, the position of the mobile holographic element (32) in relation to the support (18) determining the figurative pattern (MFi) which is illuminated by a suitable light beam (FL1), so as to project the figurative pattern (MFi) corresponding to the selected function (FTi) towards a display area (38) that can be viewed by the user.

2. Interface (10) according to the preceding claim, **characterized in that** each hologram consists of a matrix (29) of individual diffractive structures (31) in relief with at least two levels (N1, N2, N3, N4).

3. Interface (10) according to Claim 1 or 2, **characterized in that** the holograms are arranged according to a series of cells (Ci) provided to be illuminated selectively by the light beam (FL1) as a function of the selection position of the mobile member (14), each cell (Ci) simultaneously forming the coding pattern (MCi) and the associated figurative pattern (MFi) from an illumination by the same light beam (FL1).

4. Interface (10) according to the preceding claim, **characterized in that** each cell (Cᵢ) comprises a number of identical holograms forming the selected pattern (MFᵢ, MCᵢ) so as to optimize the distribution of the light power in the figurative pattern and in the coding pattern.

5. Interface (10) according to any one of the preceding claims, **characterized in that** the mobile member (14) is moved in relation to the support (18) according to a direction of activation (F1) distinct from the direction of selection (F2) between a neutral position (PN) and an activation position (PA), **in that** the mobile holographic element (32) is linked to the movements of the mobile member (14) in the direction of activation (F2), and **in that** the coding patterns (MCᵢ) are arranged on the holographic element (32) in such a way that, in the activation position (PA), the coding patterns (MCᵢ) are projected at least partially out of the photo detector (28), the absence of detection of the coding patterns (MCᵢ) by the photo detector (28) triggering an activation signal of the selected function (FTᵢ).

6. Interface (10) according to any one of Claims 1 to 4, **characterized in that** the mobile member (14) is moved in relation to the support (18) according to a direction of activation (F2) distinct from the direction of selection (F1) between a neutral position (PN) and an activation position (PA), and **in that** the movement of the mobile member (14) in the direction of activation (F2) is independent of the movement of the mobile holographic element (32).

7. Interface (10) according to any one of the preceding claims, **characterized in that** the mobile member (14) is mounted to rotate about an axis (A1), the direction of selection (F1) corresponding to the rotational movement of the mobile member (14), and **in that** the mobile holographic element (32) is borne by the mobile member (14).

8. Interface (10) according to the preceding claim taken in combination with Claim 2, **characterized in that** the mobile holographic element (32) comprises an annular disc sector of transparent optical material and **in that** the holograms are produced in the thickness of the disc.

9. Interface (10) according to Claim 7 or 8, **characterized in that** the mobile holographic element (32) comprises at least one additional figurative pattern (MFₐ, MF_{b}) which represents a state of the selected function (FTᵢ) and which is arranged outside of the cell (Ci) corresponding to the selected function (FTᵢ), said additional figurative pattern (MFₐ, MF_{b}) being illuminated by an additional light source (35, 37) and projected towards an additional display area (39).

10. Interface (10) according to any one of the preceding claims, **characterized in that** the photo detector (28) and the light source (30) producing the light beam (FL₁) illuminating the mobile holographic element (32) are arranged on a printed circuit board (16) borne by the support (18).

11. Interface (10) according to the preceding claim, **characterized in that** the coding pattern (MCᵢ) corresponding to the selected function (FTᵢ) is projected onto the photo detector (28) after reflection on at least one reflective element (34), and **in that** at least the illuminated portion of the mobile holographic element (32) is arranged between the reflective element (34) and the light source (30).

12. Interface (10) according to any one of the preceding claims, **characterized in that** the display area (38) comprises a diffusion optical element (42).

13. Method for displaying a selected function (FTᵢ) by a manual control interface (10) according to any one of the preceding claims taken in combination with Claim 3, **characterized in that** it comprises the following steps:
- detection of an indexed selection position after movement of the mobile member (14) in the direction of selection (F1),
- display of the selected function (FTi) in the form of a holographic figurative pattern (MFi) corresponding to the selection position from the light source (30) used by the photo detector (28).

14. Display method according to the preceding claim, **characterized in that** it comprises a step of detection of the state of activation of the selected function (FTᵢ) by means of the photo detector (28).
